# EUROPÄISCHE PATENTSCHRIFT

(11) **EP 2 930 158 B1**
(45) Veröffentlichungstag und Bekanntmachung des Hinweises auf die Patenterteilung: **04.03.2020**
(21) Anmeldenummer: 15163159.5
(22) Anmeldetag: 10.04.2015
(51) Int. Cl.: C04B 33/13, C04B 33/32, C04B 35/632, C04B 38/10

(54) **VERFAHREN ZUR HERSTELLUNG VON ZIEGELMODULEN UNTER VERWENDUNG DES TONLEICHTMATERIALS**
METHOD FOR THE PREPARATION OF TILE MODULES USING THE LIGHTWEIGHT CLAY MATERIAL
PROCÉDÉ DE PRODUCTION DE MODULES DE TUILES À L'AIDE DU MATÉRIAU LÉGER EN ARGILE

(30) Priorität: 11.04.2014 DE 102014207015
(43) Veröffentlichungstag der Anmeldung: 14.10.2015
(60) Teilanmeldung: 19218603.9
(73) Patentinhaber: Schlagmann Poroton GmbH & Co. KG, 84367 Zeilarn (DE)
(72) Erfinder: Bauer, Manfred, verstorben (DE); Gamisch, Peter, 84453 Mühldorf am Inn (DE); Geduhn, Jens, 84367 Tann (DE); Schmidhammer, Bernhard, 84561 Mehring (DE)
(74) Vertreter: Hoffmann Eitle

(56) Entgegenhaltungen:
- EP-A1- 0 816 303
- EP-A1- 2 868 637
- WO-A1-85/04861
- WO-A1-2011/044604
- DE-A1- 19 706 492

## Beschreibung

### Technisches Gebiet

Die vorliegende Erfindung bezieht sich auf ein Verfahren zur Herstellung von Ziegelmodulen aus tonhaltigen Materialien unter Verwendung eines Tonleichtmaterials und tonhaltigen Materialien, die das Tonleichtmaterial zur Steigerung des Porengehalts im Scherben und zur Verbesserung des Brennprozesses verwenden.

### Stand der Technik

Leichtmaterialien zeichnen sich insbesondere durch eine geringe Dichte aus, welche meist über die Ausbildung einer Schaumstruktur erreicht wird, in der eine Vielzahl von Poren durch dünne Wände oder Stege eines Matrixmaterials voneinander getrennt sind. Leichtschaummaterialien gibt es in vielen verschiedenen Werkstoffklassen, so sind zum Beispiel Polymerschäume und auch Metallschäume insbesondere Leichtmetallschäume allgemein bekannt. Es ist ebenfalls möglich, Schäume aus keramischem Material zu erzeugen, wie der unten vorgebrachte Stand der Technik zeigt. Keramische Schäume sind aufgrund ihrer guten Dämmeigenschaften, die in ihrer hohen Porosität begründet liegen, in Kombination mit ihren statischen Eigenschaften besonders für Baustoffe interessant. Diese Eigenschaften erhalten hohe Relevanz vor dem Hintergrund aktueller Bemühungen, Gebäude energieeffizienter auszugestalten bzw. energetisch zu sanieren. Demzufolge besteht ein gesteigerter Bedarf an Baumaterialien mit immer weiter verbesserten Dämmeigenschaften aber auch energieeffizienten und nachhaltigen Wegen für deren Herstellung.

Die WO 85/04861 A1 beschreibt ein Tonleichtmaterial für Bauzwecke, ein Verfahren zu dessen Herstellung und entsprechende Verwendungen. Das Tonleichtmaterial wird dabei durch Aufschäumen einer Tonsuspension mit Pressluft, Trocknen und Brennen hergestellt. Das so erhaltene Tonleichtmaterial kann in massiver Form oder als Granulat als dämmender Werkstoff verwendet bzw. in Granulatform als Zuschlagstoff zu Hochtemperatur-Baustoffen zugegeben werden. Zur Erhöhung der Rohfestigkeit können ferner hydraulische Bindemittel wie zum Beispiel Zement enthalten sein.

Die WO 2011/044604 A1 beschreibt eine Formulierung und ein Verfahren zur Herstellung eines selbsthärtenden Mineralschaums. Die Selbstaushärtung wird dabei über ein hydraulisch abbindendes Bindemittel auf Basis eines Sulfat-Aluminat-Zements bewirkt. Der Schaum wird im Wesentlichen dadurch erzeugt, dass einer Suspension ein separat erzeugter Protein- und/oder Tensidschaum zugesetzt wird ohne, dass die Suspension selbst aufgeschäumt wird. Der so erzeugte Mineralschaum wird dann in Formen gegeben, um darin durch chemische Reaktionen hydraulisch und/oder puzzolanisch abzubinden. Dem Mineralschaum kann ferner ein Hydrophobiermittel zugesetzt werden, um insbesondere die Formulierung des Mineralschaums zu hydrophobieren.

Weiterer Stand der Technik findet sich in WO 2011/044604 A1, welche einen selbsthärtenden Mineralschaum beschreibt, und in WO 85/04861 A1, welche eine Leichtkeramikmaterial für Bauzwecke beschreibt.

### Darstellung der Erfindung

Die vorliegende Erfindung wird definiert durch den unabhängigen Verfahrensanspruch. Die diesbezüglichen Unteransprüche definieren optionale Merkmale und bevorzugte Ausführungsformen.

Im Rahmen der vorliegenden Offenbarung wird ein Tonleichtmaterial beschrieben, das zur Herstellung von Baumaterialien, insbesondere Ziegelmodulen aus tonhaltigen Materialien, eingesetzt werden kann ohne zuvor durch zusätzliche Verfahrensschritte stabilisiert werden zu müssen. Eine weiterer Aspekt der Offenbarung ist es, unter Verwendung des Tonleichtmaterials ein Verfahren zu beschreiben, in dem Ziegelmodule aus tonhaltigen Materialien mit hoher Porosität, geringer Rohdichte und guten Dämmeigenschaften hergestellt werden können. Es ist die Aufgabe der vorliegenden Erfindung, ein Verfahren zur Herstellung von Ziegelmodulen aus tonhaltigen Materialien bereitzustellen, bei dem insbesondere der Brennprozess besser steuerbar und emissionsärmer ist.

Der Erfindung und der vorliegenden Offenbarung liegt zum einen der Gedanke zu Grunde, dass Tonleichtmaterialen, worunter in der Regel Tonschäume d.h. feste Tonmaterialien mit hoher Porosität zu verstehen sind, zur Herstellung von und Verwendung in Baumaterialien in Gegenwart wasserhaltiger Medien zunächst stabilisiert werden müssen. Daher ist es konventioneller Weise erforderlich, die Tonleichtschäume durch Brennprozesse oder Autoklavieren zu stabilisieren d.h. auszuhärten. Verfahrensökonomisch ist dies negativ zu bewerten, da es sich dabei um zusätzliche Verfahrensschritte handelt, die zeit- und kostenaufwendig sind. Aushärtungsmechanismen bei Raumtemperatur in Gegenwart wasserhaltiger Medien wie sie bei zementhaltigen Baumaterialien möglich sind, gibt es bei tonhaltigen Werkstoffen nicht und daher waren bisher thermische Stabilisierungsschritte unumgänglich. Das bloße Trocknen von Tonleichtschäumen bewirkt zwar eine gewisse mechanische Stabilisierung jedoch findet keine echte Aushärtung statt, sodass ein Tonschaum bei Weiterverwendung in Gegenwart wasserhaltiger Medien aufweicht und seine vorteilhafte poröse Schaumstruktur verliert.

Aus diesem Grund wurde im Rahmen der vorliegenden Offenbarung ein Weg gesucht, Tonleichtmaterialien, insbesondere Tonleichtschäume, ohne aufwendige zusätzliche Verfahrensschritte zur weiteren Verwendung ausreichend stabilisieren zu können.

Ein weiterer Grundgedanke der Erfindung und der vorliegenden Offenbarung ist es, dass die Dämmeigenschaften von Ziegelmodulen maßgeblich durch den Porengehalt des Ziegelmaterials bestimmt werden. Konventionell werden dem Ziegelgrundmaterial daher entsprechende Mengen an meist organischen Porosierungsmitteln zugegeben, die beim Brennen eine entsprechende Porosität erzeugen. Wie auch nachfolgend beschrieben wird, ist der Zusatz großer Mengen an Fremdstoffen zur Generierung einer porösen Struktur verfahrens- und kostentechnisch nachteilig. Diese Nachteile sind insbesondere relevant für die Herstellung von Ziegelmodulen mit sehr geringen Wärmeleitfähigkeiten und besonders guten Dämmeigenschaften, da diese eine besonders hohe Porosität, einhergehend mit einer geringen Rohdichte erfordern.

Aus diesem Grund wurde im Rahmen der vorliegenden Erfindung und Offenbarung ein Weg gesucht, die benötigte Porosität durch Zusätze aus der gleichen Rohmaterialgattung aus der das Ziegelgrundmaterial stammt, zu erzeugen, um damit den Fremdstoffzusatz zu verringern und Ziegelmodule mit geringer Rohdichte herzustellen.

Abschließend liegt der vorliegenden Erfindung und Offenbarung der Gedanke zu Grunde, dass konventionelle Porosierungsmittel Probleme im Herstellungsprozess, insbesondere beim Brennen, hervorrufen können. Die Probleme liegen darin begründet, dass sich die meisten konventionellen Porosierungsmittel, zum Beispiel Sägespäne, Papierfangstoffe etc. im Brennprozess nicht "energieneutral" verhalten. Das bedeutet, dass diese sich beim Abbrand exotherm zersetzen und einen erheblichen Energieeintrag in den Brennprozess bewirken, der 25 % und mehr der Gesamtenergiemenge betragen kann. Im Ergebnis führt dies zu unerwünschten Temperaturschwankungen, die schwer vorhersehbar sind und denen daher auch nur schwer verfahrens- und steuerungstechnisch entgegengetreten werden kann. Darüber hinaus geht der Abbrand konventioneller Porosierungsmittel mit einer unerwünschten Freisetzung von Luftschadstoffen einher, welche wiederum mit thermischen Abgasreinigungsanlagen aufwendig entfernt werden müssen.

Aus diesem Grund wurde im Rahmen der vorliegenden Erfindung und Offenbarung nach einem Weg gesucht, den Herstellungsprozess von Ziegelmodulen, insbesondere den Brennprozess, besser steuerbar und emissionsärmer zu gestalten.

Im Rahmen der vorliegenden Offenbarung wird eine Formulierung zur Herstellung eines Tonleichtmaterials, insbesondere als Bestandteil und Zuschlagstoff für Baumaterialien, insbesondere Ziegelmodule, und deren Herstellung, beschrieben. Als Formulierung ist hierbei eine Rezeptur bzw. Breitstellung eines Stoffgemisches zur Herstellung eines entsprechenden Tonleichtmaterials zu verstehen. Die Formulierung weist dabei eine Tonmaterialsuspension, optional ein Bindemittel, ein Hydrophobiermittel, einen Schaumbildner und optionale Zusatzmittel wie beispielsweise Verflüssiger (Plastifizierer) und/oder Verdicker und/oder weitere Additive auf, wobei die Tonmaterialsuspension tonhaltige Materialien sowie Wasser aufweist, und das Hydrophobiermittel zur Stabilisierung des Tonleichtmaterials gegenüber wasserhaltigen Medien dient. Verdicker werden zur rheologischen Einstellung einer Tonsuspension eingesetzt und es können dafür verschiedene Verdickerarten verwendet werden. Zu nennen sind sog. natürliche Verdicker, vor allem Polysacharide (Stärke, Pektine) und Polypeptide (Gelatine), modifizierte natürliche Verdicker, vor allem Celluloseether und synthetische Verdicker, vor allem Polyacrylsäuren. Im vorliegenden Fall ist es bevorzugt natürliche bzw. modifizierte natürliche Verdicker einzusetzen. Der Verdicker wird vor allem nach seiner Effektivität der ansteifenden Wirkung, seiner möglichst hohen Wasserlöslichkeit und Stabilität bei einem eingestellten pH-Wert, ausgewählt. Die eingesetzten Mengen liegen dabei beispielsweise bei bis zu etwa 0,5 %, bevorzugt bei etwa 0,1 %.

Bevorzugt weist die Tonmaterialsuspension einen Anteil tonhaltiger Materialien von etwa 65 bis etwa 98 Gew.-% vom Feststoffgehalt auf. In dieser Variante ist die Tonmaterialsuspension demnach ein Gemisch aus Wasser, beispielhaft kann es sich dabei um Leitungswasser und/oder Prozesswasser handeln, und tonhaltigen Materialien sowie möglichen Additiven zur Verflüssigung. Als tonhaltige Materialien seien beispielhaft Ziegelton und Reinton genannt. Als Rohstoffklassen kommen dabei in Frage, sind aber nicht darauf beschränkt: Kaolin-Tone und Schlämmkaolin; Fireclay-Tone; Illit-Tone und Tonsteine; Betonit; Ton- und Sandmergel und Mergelstein; Lößlehm; Kieselgur; Waschschlämme aus der Kies- und Sandaufbereitung sowie Gemische aus allen vorgenannten Rohstoffklassen. Als mögliche Kornfraktionen der tonhaltigen Materialien seien beispielhaft: < 0,125 mm; < 0,25 mm; < 0,5 mm, < 1 mm und < 2mm und beliebige Mischungen davon genannt.

Bevorzugt weist das Bindemittel zumindest eines aus der Gruppe von Tonerdeschmelzzement, Kunststoffpolymer und Geopolymer auf. Als Bindemittel sind Zusatzstoffe zu verstehen, die fraktionierten Feststoffen d.h. Feststoffen mit einem feinen Zerteilungsgrad, zugegeben werden, um die einzelnen Feststoffpartikel miteinander zu "verkleben". Die Art und Menge des zugesetzten Bindemittels wird u.a. durch die Korngröße und den Typ des verwendeten Tonmaterials bestimmt. Bei geringen Partikelgrößen liegt bereits eine große reaktive Kontaktfläche und starke Verzahnung zwischen den Partikeln vor und es wird daher tendenziell weniger oder kein Bindemittel benötigt. Werden jedoch verhältnismäßig grobe Partikel verwendet und übersteigt deren Kornanteil eine gewisse Grenze, dann ist der Einsatz von Bindemitteln erforderlich. Beispielhaft seinen hier bis etwa 5 bevorzugt bis etwa 3 Gew.-% Bindemittelgehalt genannt. Mit Vorteil brennen Bindemittel basierend auf organischen Polymeren aus und bewirken zusätzliche Porosität. Die Verwendung von Tonerdeschmelzzement ist vorteilhaft darin, dass dieser den Brennprozess übersteht ohne zerstört zu werden und damit die Druckfestigkeit des gebrannten Produktes steigert.

Bevorzugt weist das Hydrophobiermittel der Formulierung zumindest siliziumhaltige Materialien und einen Anteil am Feststoffgehalt der Formulierung von etwa 0,1 bis etwa 1,5, bevorzugt bis zu etwa 2 und weiter bevorzugt bis zu etwa 8 Gew.-% auf. Als ein mögliches Hydrophobiermittel kann hier Methylsiliconat genannt werden, ist aber nicht darauf beschränkt. Bei der Wahl des Hydrophobiermittels ist darauf zu achten, dass dieses sich nicht negativ auf die Schaumbildung auswirkt. Ölhaltige Hydrophobiermittel mit starken lipophilen Eigenschaften erscheinen deshalb ungeeignet, da sie die gewünschte Schaumstruktur zerstören können. Die Anwesenheit des Hydrophobiermittels bewirkt, dass das, aus der Formulierung erzeugte, Tonleichtmaterial einen hydrophoben Charakter besitzt, d.h. wasserabweisend ist. Dies ist mit zahlreichen Vorteilen verbunden, die im weiteren Verlauf beschrieben werden.

Bevorzugt ist ferner, dass der Schaumbildner zumindest eines aus der Gruppe von Proteinschaumbildnern und Tensidschaumbildnern aufweist. Schaumbildner oder auch Schaummittel sind erforderlich, um aus der Formulierung ein Tonleichtmaterial erzeugen zu können. Unter der Zufuhr von Gas wird dabei ein Schaum gebildet d.h. eine Struktur aus gashaltigen Bläschen, die von festen oder flüssigen Wänden umschlossen sind. Beispielhaft sei hier ein Anteil von 0,3 bis 3 Gew.-% vom Feststoffgehalt für die Schaummittel genannt.

Bevorzugt weisen die Zusatzmittel der Formulierung zumindest eines aus der Gruppe von Erstarrungsbeschleunigern und Hochleistungsplastifizierern auf. Hierbei sind generell verschiedenste Zusatzmittel denkbar, die zur Optimierung der Verarbeitungs- und Produkteigenschaften zugesetzt werden können. Beispielsweise können Erstarrungs- bzw. Erhärtungsbeschleuniger mit bis zu 1 Gew.-% vom Bindemittelgehalt der Formulierung zugegeben werden. Mit Vorteil tragen Erstarrungs- bzw. Erhärtungsbeschleuniger zur schnellen Stabilisierung der Porenstruktur eines erzeugten Schaumes bei.

Weiter bevorzugt weist die Formulierung ein Wasser-Feststoff-Verhältnis von etwa 0,55:1 bis etwa 0,85:1 oder 1:1 oder 1,2:1 auf.

Gemäß einem weiteren Aspekt der vorliegenden Offenbarung wird ein Verfahren zur Herstellung eines Tonleichtmaterials, insbesondere als Bestandteil und Zuschlagstoff für Baumaterialien, insbesondere Ziegelmodule, und deren Herstellung, beschrieben. Das Verfahren weist dabei die folgenden Schritte auf: Herstellen der zuvor beschriebenen Formulierung; Herstellen eines Tonschaums aus der Formulierung und Trocknen des Tonschaums.

Bevorzugt umfasst der Schritt der Herstellung der Formulierung dabei zunächst: die Herstellung einer Tonmaterialsuspension durch Vermischen von tonhaltigen Materialien, Wasser und optional Bindemittel; die Herstellung einer Mischung von Zusatzstoffen, bevorzugt durch Mischen von Hydrophobiermittel, Schaumbildner und optional Zusatzmitteln und abschließend das Mischen der Tonmaterialsuspension und der Mischung von Zusatzstoffen. Es kann demnach also eine separate Herstellung einer Tonsuspension durch Vermischen tonhaltigen Materials mit Wasser und nach Bedarf Bindemittel, und eine separate Herstellung einer Mischung von Zusatzstoffen erfolgen. Zum Zwecke der Homogenisierung kann es sinnvoll sein, die Zusatzstoffe zunächst untereinander in einem Vormischvorgang gut zu vermischen und erst dann der wasserhaltigen Tonsuspension zuzuführen und mit dieser zu vermischen. Jedoch ist es auch möglich, die Zusatzstoffe einzeln zu der Tonsuspension hinzuzugeben oder auch erst im Schritt des Aufschäumens. Bei obiger Vermischung ist es wichtig, dass das Hydrophobiermittel besonders gut in der Suspension verteilt wird, um später optimal wirken zu können. Die zum Mischen eingesetzten Techniken sind nicht besonders beschränkt und sollten Techniken sein, die im industriellen Maßstab arbeiten und eine gute Homogenisierung der Stoffgemische gewährleisten.

Das erzeugte Gesamtgemisch stellt dann die Formulierung dar, aus der in den weiteren Schritten das Tonleichtmaterial erzeugt wird. Insgesamt ist festzuhalten, dass die Formulierung so beschaffen sein muss, dass daraus ein Tonleichtmaterial d.h. ein Tonschaum erzeugt werden kann. Dies setzt insbesondere voraus, dass das erzeugte Gesamtgemisch gut aufschäumbar ist und einen eigenstabilen Schaum ausbildet, der nicht kollabiert sondern die Schaumstruktur möglichst lange nach dem Aufschäumen beibehält. Für gute Aufschäumbarkeit müssen zum Beispiel die Dichte und die Viskosität des Gesamtgemischs optimiert werden.

Weiter ist es bevorzugt, dass der Tonschaum durch Aufschäumen der zuvor beschriebenen und erzeugten Formulierung mittels eines Schaumgeräts erzeugt wird. Auch hier sind die Aufschäumtechniken nicht besonders beschränkt. Als mögliche Schaumaggregate seien Statikmischer und Eirichmischer sowie Rotor-/Statormischer genannt. Mit Hilfe eines Schaumgeräts wird in der Regel ein Gas in eine mehr oder weniger viskose Masse, hier die Formulierung, geblasen und so eine Schaumstruktur erzeugt. Es ist jedoch auch denkbar, dass zum Beispiel Luft durch entsprechend ausgestaltete Mischvorgänge in die Suspension eingebracht und somit ebenfalls eine Aufschäumung bewirkt wird. In diesem Fall würde das Aufschäumen in-situ in einem Mischprozess erfolgen. Die Schaumstruktur besteht in Abhängigkeit vielfältiger Verfahrensparameter dann aus Hohlräumen, die durch mehr oder weniger dicke Stege bzw. Wände voneinander getrennt sind. Neben oder in Ergänzung der obigen Schaumerzeugung kann eine Wasserstoffgasfreisetzung in Analogie zu Gasbetonherstellung zur Erzeugung von Porosität eingesetzt werden. Die Gasfreisetzung kann auf der Zugabe von Aluminiumpulver oder siliziumbasierender Stoffe beruhen.

In einem weiteren Beispiel der vorliegenden Offenbarung umfasst das Verfahren zur Herstellung eines Tonleichtmaterials einen Schritt des Granulierens des Tonschaums vor oder während oder nach dem Schritt des Trocknens des Tonschaums zum Herstellen eines Tonschaumgranulats. Der Trocknungsschritt selbst dient zur Reduzierung des Flüssigkeitsgehalts und einer gewissen Anhärtung des Tonschaums. Die Trocknung kann dabei zum Beispiel so durchgeführt werden, dass der Tonschaum mit einer geeigneten Dicke, z.B. 200 mm, auf ein Transportsubstrat aufgetragen und dann z.B. in einem Durchlauftrockner von zwei Seiten mit heißer Luft angeströmt bzw. von heißer Luft durchströmt wird. Ferner ist es vorteilhaft mit hohen Anfangstemperaturen zu beginnen, um eine schnelle Antrocknung der Schaumoberfläche zu erreichen. Trocknungstemperaturen liegen dabei bei etwa bis zu 150 °C und es wird auf das Erreichen einer Restfeuchte von weniger als etwa 0,5 % abgezielt. Durch die hohe Porosität des Tonleichtmaterials kann Wasser und erzeugter Wasserdampf über das Kapillargefüge verhältnismäßig schnell entweichen und Trocknungszeiten entsprechend kurz gehalten werden. Das Verfahren ist jedoch nicht auf diesen Trocknungsprozess beschränkt und es können andere Trocknungsverfahren, die vergleichbare Ergebnisse erzielen, angewandt werden. Als Bespiel eines alternativen Verfahrens sei hier die Mikrowellentrocknung genannt, die aufgrund ihrer physikalischen Wirkprinzipien eine Trocknung von innen heraus, d.h. überwiegend aus dem Materialvolumen und weniger von der Oberfläche her, bewirkt.

Für den Schritt des Granulierens sind verschiedenen Methoden und Prozessabläufe denkbar, die das Zerkleinern des Tonschaums umfassen. Erstens kann das Granulieren vor dem Trocknen erfolgen. Dafür wird der noch feuchte Tonschaum zum Beispiel mittels eines Granuliertellers granuliert und das so erhaltene Granulat anschließend getrocknet. Zweitens ist es vorstellbar, dass Trocknen und Granulieren simultan, in einem Prozessschritt, stattfinden. Beispielhaft sei hierfür die Granulierung des feuchten Tonschaums in einem Sprühturm oder ferner bevorzugt die Granulierung und Trocknung mittels Wirbelschichtverfahren genannt. Letzteres eröffnet zudem vielfältige Möglichkeiten, die Beschaffenheit des Granulats gezielt einzustellen. Drittens kann zunächst der Tonschaum, wie oben beschrieben, getrocknet und von einer monolithischen Form ausgehend durch Brechen granuliert werden. Der Schritt des Brechens ist hierbei auch nicht besonders beschränkt und beispielsweise kann hierfür ein Backenbrecher Verwendung finden. Die oben beispielhaft beschriebenen Granuliertechniken können auch beliebig miteinander kombiniert werden und sind zudem nicht auf diese allein beschränkt. Der optionale Schritt des Siebens dient zum einen der Aufteilung des Granulats in verschiedene Kornfraktionen, sodass bereits mit Hinblick auf die weitere Verwendung des Tonleichtmaterials jeweils geeignete Körnungen separiert werden können. Zum anderen können zu grobe oder zu feine Bestandteile des Granulats, die zunächst für eine Weiterverwendung ungeeignet scheinen, abgetrennt werden. Es ist auch vorstellbar, dass gewisse Siebrückstände insbesondere zu dem Brecher zurückzugeführt werden. Der Schritt des Granulierens hat insgesamt den Vorteil, dass das Tonleichtmaterial besser handhabbar wird.

In einem weiteren bevorzugten Beispiel der vorliegenden Offenbarung wird das Tonschaumgranulat in ein Silo transportiert und dort aufbewahrt, bis es einer weiteren Verwendung zugeführt wird. Die Granulierung ist auch deswegen vorteilhaft, da das zerkleinerte Tonleichtmaterial gut mit anderen Stoffen vermischt und verbunden werden kann. Als Endprodukt der Herstellung des Tonleichtmaterials steht somit ein Tonleichtschaumgranulat mit unterschiedlichen Kornfraktionen zur Weiterverwendung bereit.

Neben der Beschreibung einer Formulierung zur Herstellung eines Tonleichtmaterials und einem Verfahren zur Herstellung desselben, ist es ein weiterer Aspekt der vorliegenden Offenbarung, das Tonleichtmaterial selbst zu beschreiben. Das Tonleichtmaterial ist dabei insbesondere als Bestandteil und Zuschlagstoff für Baumaterialien, insbesondere Ziegelmodule, und deren Herstellung gedacht, wird aus der oben beschriebenen Formulierung mittels des oben beschriebenen Verfahrens hergestellt und zeichnet sich durch eine Schaumstruktur und dadurch aus, dass es durch ein Hydrophobiermittel zur Verwendung mit wasserhaltigen Medien stabilisiert ist.

Es ist daher bevorzugt, dass das Tonleichtmaterial, durch die Stabilisierung durch das Hydrophobiermittel, in einem ungebrannten und/oder nicht-autoklavierten Zustand gegenüber wasserhaltigen Medien stabilisiert ist. Insbesondere bei einem Tonleichtmaterial ist die Frage der Stabilisierung von großer Bedeutung. Zunächst ist festzustellen, dass tonhaltige Materialien im ungebrannten Zustand bei Kontakt mit wasserhaltigen Medien aufweichen, es kommt zu einer "Rückbefeuchtung" durch welche die Materialien erheblich an mechanischer Festigkeit einbüßen. Dabei wird der Trocknungsprozess umgekehrt und vorher entzogenes Wasser wieder durch das Tonleichtmaterial aufgenommen. Diese Aufweichung würde dazu führen, dass die Schaumstruktur des Tonleichtmaterials kollabiert und das Material so seine vorteilhaften Eigenschaften für die Weiterverwendung verliert. Daher werden konventioneller Weise entsprechende Tonleichtmaterialien vor der Weiterverwendung durch Brennen bzw. Autoklavieren stabilisiert. In diesen Prozessen wird in den tonhaltigen Materialien eine beständige keramische Bindung erzeugt und die Restfeuchtigkeit weiter verringert, das Material härtet aus. Das so behandelte Tonleichtmaterial ist wesentlich unempfindlicher gegenüber wasserhaltigen Medien und verliert bei der Weiterverwendung nicht seine Festigkeit. Allerdings stellen Brennen und Autoklavieren zusätzliche Verfahrensschritte dar, die apparativ, energetisch und zeitlich aufwendig sind und daher vermieden werden sollten. Die vorliegende Offenbarung beschreibt einen neuen Ansatz, der darin besteht, den Kontakt eines ungebrannten Tonleichtmaterials mit wasserhaltigen Medien durch Hydrophobierung so signifikant zu verringern, dass kaum Wasser in das Tonleichtmaterial eindringen und dieses aufweichen kann. Dies wird durch das enthaltene Hydrophobiermittel erreicht, indem die freien Oberflächen des Tonleichtmaterials, an denen der Kontakt mit wasserhaltigen Medien stattfindet, hydrophoben Charakter verliehen bekommen und einer flächigen Benetzung mit Wasser entgegengewirkt wird. Auf hydrophilen Oberflächen breitet sich Wasser großflächig aus und bildet eine ausgedehnte Austauschgrenzfläche. Bei dem Tonleichtmaterial ist jedoch von einer signifikant hydrophoben Oberfläche mit entsprechend großen Kontaktwinkeln und entsprechend kleinen Kontaktflächen zwischen wasserhaltigen Medium und dem Tonleichtmaterial auszugehen. Demzufolge kann das Tonleichtmaterial gänzlich ohne zusätzliche Verfahrensschritte stabilisiert werden. Dafür bedarf es einfacher Zugabe eines Hydrophobiermittels zu der Formulierung/Rezeptur des Tonleichtmaterials. Unabhängig von der weiteren Verwendung des Tonleichtmaterials kann somit bereits ein, im Vergleich zum Stand der Technik, kostengünstigeres und weniger aufwendig herzustellendes Tonleichtmaterial bereitgestellt werden.

Es ist insbesondere bevorzugt, dass die Hydrophobierung eine chemische Hydrophobierung ist. Diese zeichnet sich durch Ausbildung chemischer Bindungen zwischen dem Hydrophobiermittel und entsprechenden Oberflächen des Tonleichtmaterials aus. Ferner ist es bevorzugt, dass die Moleküle des Hydrophobiermittels nicht nur chemisch an das Tonleichtmaterial gebunden sind, sondern auch untereinander vernetzen und so der Hydrophobierung zusätzliche Beständigkeit verleihen.

Es ist zudem bevorzugt, dass das Tonleichtmaterial einen Porengehalt von etwa 40 bis etwa 90 % aufweist. Demzufolge kann je nach Anwendungsbereich des Tonleichtmaterials ein sehr leichtes Material mit geringer Dichte, das überwiegend aus Poren besteht und nur dünne Wände und Stege dazwischen aufweist, oder ein massigeres Material mit dickeren Wänden und Stegen und weniger Poren, erhalten werden. Durch den Porengehalt werden insbesondere die Wärmeleiteigenschaften sowie die mechanische Festigkeit bestimmt. Mit steigendem Porengehalt verbessern sich in der Regel die Dämmeigenschaften und mit abnehmendem Porengehalt die Tragfähigkeit des Materials.

Ferner ist es bevorzugt, dass das Tonleichtmaterial ein Tonleichtschaum ist bzw. dass das Tonleichtmaterial ein Granulat, bevorzugt eine Tonleichtschaumgranulat ist.

Das Tonleichtmaterial weist bevorzugt eine Rohdichte nach der Trocknung von etwa 0,25 bis etwa 1,0 t/m³ auf.

Ein Aspekt der vorliegenden Erfindung ist es ein Verfahren zur Herstellung von Ziegelmodulen, insbesondere Ziegelmodulen aus tonhaltigen Materialien mit einer Nettotrockenrohdichte bzw. Scherbenrohdichte von kleiner gleich etwa 1 t/m³, bereitzustellen. Das Verfahren zielt dabei insbesondere auf die Herstellung von leichten Ziegelmodulen mit optimierten Dämmeigenschaften ab. Das erfindungsgemäße Verfahren umfasst die Herstellung eines Tonleichtmaterials mit dem zuvor beschriebenen Verfahren; die Herstellung einer formbaren Tonmasse, die Formgebung der Tonmasse zu Ziegelmodulen, das Trocknen der geformten Ziegelmodule, das Brennen der getrockneten Ziegelmodule und das Nachbearbeiten der gebrannten Ziegelmodule. Als Ziegelmodule sind hier bevorzugt wandbildende Ziegelmodule, weiter bevorzugt Lochziegel und insbesondere bevorzugt Hochlochziegel gemeint und werden im Folgenden auch als "Scherben" -bzw. SB-(Schmidhammer/Bauer) Scherben bezeichnet.

Der Schritt des Herstellens der formbaren Tonmasse weist die folgenden Unterschritte auf: Herstellen eines Bindetons, bevorzugt eines hochplastisch bis pastös eingestellten Bindetons, durch Mischen von tonhaltigen Material, Wasser und optional zumindest eines Extrusionshilfsmittels und Mischen des Bindetons, des Tonleichtmaterials und optional zumindest eines Sinterhilfsmittels. Dabei entsteht bevorzugt eine extrusionsfähige Tonmasse. Der zugesetzte Anteil des Tonleichtmaterials beträgt etwa 40 bis etwa 90 Vol.-%. Der Bindetonanteil beträgt etwa 10 bis etwa 60 Gew.-%. Unter Bindeton ist hier im Wesentlichen eine Mischung aus Wasser und tonhaltigen Material zu verstehen, aus der selbst, d.h. ohne Zugabe des Tonleichtmaterials, ein konventioneller Tonziegel hergestellt werden könnte. Der Bindeton kann auch als Grundwerkstoff des Ziegels verstanden werden. Als tonhaltige Materialien kommen die im Zusammenhang mit der Formulierung Genannten in Frage. Je nach Anwendungsgebiet kann das Tonleichtmaterial in unterschiedlichen Körnungen: < 0,125 mm; < 0,25 mm; < 0,5 mm; < 1 mm; < 2 mm und < 3 mm (D₈₀) und beliebigen Mischungen davon, zugegeben werden. Sinterhilfsmittel können je nach Mineralogie des Bindetons zur Steuerung des Sinterverhaltens zugesetzt werden, können aber auch entbehrlich sein. In Frage kommen dabei zum Beispiel Glasmehl und/oder Natursteinmehle bzw. Natursteinsande und zugegebene Mengen von bis zu etwa 3 Gew.-% der Gesamtformulierung. Extrusionshilfsmittel können in Abhängigkeit der Plastizität des Bindetons und dem Gesamtextrusionsverhalten der Mischung aus Bindeton und Tonleichtmaterial optional zugegeben werden. Als Beispiel seien Plastifizierer, Ligninsulfonat, Natriumpolyphosphat, modifiziertes Natriumpolyphosphat und Melaminformaldehydharz sowie Zugaben von etwa 0,3 bis etwa 2 Gew.-% von der Trockensubstanz genannt.

In einer bevorzugten Ausführungsform des Verfahrens weist der Schritt der Formgebung der formbaren Tonmasse einen Extrusionsschritt der formbaren Tonmasse zu Ziegelmodulen mit massigen Stegen auf. Beispielhaft wird die formbare Tonmasse häufig an geeigneter Stelle einer Geräteanordnung bestehend aus Doppelwellenmischer, Vakuumkammer, Einzelschnecke und Mundstück zugeführt und entsprechend ausgeformt. Jedoch ist die Formgebung nicht darauf beschränkt und in Frage kommen auch andere Verfahren, die im industriellen Maßstab entsprechende Ziegelmodule erzeugen können. Auch sind vielfältige Geometrien und Ausgestaltungen der Ziegelmodule denkbar, die z.B. durch die Wahl entsprechender Extrusionswerkzeuge realisiert werden können. Vorteilhaft beim Extrudieren ist die kontinuierliche und reproduzierbare Formgebung von Ziegelmodulen.

Das Trocknen der geformten Ziegelmodule kann zum Beispiel in einem Durchlauftrockner und bei Trockentemperaturen von bis zu etwa 200 °C erfolgen. Dabei ist es bevorzugt, die Restfeuchte des geformten Ziegelmoduls auf kleiner 2 % zu reduzieren. Das Brennen der getrockneten Ziegelmodule kann beispielsweise in einem Durchlaufofen erfolgen. Die Brenntemperaturen können im Bereich von etwa 700 bis etwa kleiner 1000 °C liegen. Brenntemperaturen und Brennzeiten sind dabei abhängig von der Rezeptur des Ziegelwerkstoffs und der Ziegelmodulgeometrie. Das Brennen kann ferner als Schnellbrand oder im Paketbesatz erfolgen. Generell sind die Schritte des Trocknens und Brennens nicht auf die hier beispielhaft angegebenen Möglichkeiten begrenzt und es können auch andere Verfahren, die ähnliche Ergebnisse erzielen, eingesetzt werden.

Es ist ferner bevorzugt, dass beim Schritt des Brennens der geformten Tonmasse eine keramische Bindung zwischen dem Tonleichtmaterial und dem Bindeton bewirkt wird. Die Mischung aus Bindeton und Tonleichtmaterial kann vor dem Brennen im Prinzip als Verbundwerkstoff angesehen werden, der aus einer pastösen tonhaltigen Masse mit darin eingebrachten Fragmenten des Tonleichtmaterials, genauer des Tonleichtschaumgranulats, besteht. Durch die Hydrophobierung des Tonleichtmaterials weicht und löst sich dieses nicht in der tonhaltigen Masse auf und bleibt daher als strukturelle Komponente erhalten. Im Brennschritt findet dann die Ausbildung keramischer Bindungen statt, wobei der Bindeton und das Tonleichtmaterial jeweils selbst keramisch binden, aber auch zwischen diesen Materialien eine feste keramische Bindung ausgebildet wird. Bei hohen Anteilen von Tonleichtmaterial in der Tonmasse bildet dieses eine Art Matrix, in welcher der Bindeton integriert ist bzw. welcher die Fragmente des Tonleichtmaterials miteinander verbindet. Im umgekehrten Fall kann der Bindeton als Matrix angesehen werden, in welcher die Fragmente des Tonleichtmaterials eingebettet sind. Daraus ergibt sich der Vorteil, dass nur eine Rohmaterialgattung vorliegt d.h. das Ziegelmodul werkstofflich homogen ist, was die Verarbeitung erheblich vereinfacht und Fremdstoffzusätze verringert.

In einer weiteren bevorzugten Ausführungsform weist der Schritt des Nachbearbeitens der gebrannten Ziegelmodule Planschleifen und/oder Verfüllen von Dämmstoff in Öffnungen des Ziegelmoduls und Verpacken der fertig bearbeiteten Ziegelmodule auf. Vorstellbar ist hierbei insbesondere das Verfüllen von Perlit in Ausnehmungen der Ziegelmodule, was zu Ziegelmodulen mit besonders niedrigen Wärmeleitfähigkeiten und hervorragenden Dämmeigenschaften führt.

Ein weiterer Aspekt der vorliegenden Erfindung ist es ein Verfahren zum Herstellen von Ziegelmodulen, insbesondere Ziegelmodulen aus tonhaltigen Materialien mit einer Nettotrockenrohdichte bzw. Scherbenrohdichte von größer gleich etwa 1 t/m³, bereitzustellen. Dieses Verfahren weist ähnliche Verfahrensschritte wie das zuvor beschriebene Verfahren auf und realisiert auch sämtliche damit assoziierte Vorteile. Aus diesem Grund werden an dieser Stelle nur Unterschiede zwischen beiden Verfahren beschrieben. Der Hauptunterschied liegt darin, dass das Tonleichtmaterial im Wesentlichen als gattungsgleiches und energiefreies Porosierungsmittel zugegeben wird. Unter "energiefrei" ist hier "im Wesentlichen energiefrei" zu verstehen. Das bedeutet, dass im Vergleich zu konventionellen Porosierungsmitteln, die beim Abbrand signifikante Menge an thermischer Energie freisetzten, bei Verwendung des Tonleichtmaterials, wenn überhaupt, ein nur vernachlässigbarer Energieeintrag vorliegt.

Alternativ beträgt der zugesetzte Anteil des Tonleichtmaterials etwa 5 bis etwa 40 Vol.-% und der zugesetzte Anteil des Bindetons etwa 60 bis etwa 95 Gew.-%. Die Nettotrockenrohdichte bzw. Scherbenrohdichte größer gleich 1 t/m³ wird somit über einen verringerten Anteil zugesetzten Tonleichtmaterials erreicht. Damit wird insbesondere die Tragfähigkeit der erzeugten Ziegelmodule erhöht.

Als ein Aspekt des Verfahrens wird das Tonleichtmaterial im Schritt des Herstellens der formbaren Tonmasse als energiefreies Porosierungsmittel zugegeben und setzt im Schritt des Brennens der geformten Tonmasse praktisch keine thermische Energie frei. Wie bereits beschrieben, bewirkt der Abbrand konventioneller Porosierungsmittel die Freisetzung teils erheblicher Mengen thermischer Energie, die zu Temperaturschwankungen im Brennprozess führen können. Zudem werden beim Abbrand insbesondere organischer Porosierungsmittel, Luftschadstoffe freigesetzt, die über Abgasreinigungsanlagen aufwendig entfernt werden müssen. Diese Probleme können durch den Einsatz des Tonleichtmaterials vermieden werden. Das Tonleichtmaterial brennt nicht in der Art und Weise herkömmlicher Porosierungsmittel ab, sondern die zugeführte thermische Energie wird für die Ausbildung keramischer Bindungen und das Aushärten des Materials benötigt. Thermische Energie wird daher eher aufgenommen als abgegeben. Auch geht der Brennprozess des Tonleichtmaterials im Wesentlichen ohne Ausstoß schädlicher Emission einher. Größtenteils wird dabei gasförmiges Wasser freigesetzt. Der Bindeton wird also durch das Einbetten des porösen Tonleichtmaterials und der Erhaltung dessen Porenstruktur im Brennprozess selbst porosiert. Somit kann die Menge zuzugebender Fremdstoffe reduziert werden, der Brennprozess ist besser steuerbar und Schadstoffemissionen werden vermindert. Ein weiterer Vorteil ist, dass die Steuerung des Brennprozesses von dem Porosierungsgrad entkoppelt ist. Bei herkömmlichen Porosierungsmitteln geht eine Veränderung des Energieeintrags meist unvermeidlich mit einer Veränderung der Porosität im Endprodukt einher. Die Verwendung des Tonleichtmaterials ermöglicht es hingegen, eine hohe Porosität zu erreichen, ohne gleichzeitig den Energieeintrag in den Brennprozess zu erhöhen bzw. vice versa den Energieeintrag zu begrenzen ohne dabei zwangsläufig die Porosität zu verringern.

Für die oben beschriebenen Verfahren zur Herstellung von Ziegelmodulen ist es von Bedeutung, dass die Starttemperaturen der Sinterung so eingestellt werden, dass der Bindeton vor dem Tonleichtmaterial zu sintern beginnt, damit die Porenstruktur des Tonleichtmaterials nicht geschädigt oder gar zerstört wird. Wird dies realisiert, überträgt sich die intrinsische Porosität des Tonleichtmaterials auf das gebrannte Ziegelmodul. Es ist jedoch ferner vorstellbar, dass noch zusätzlich Porosierungsmittel, zum Beispiel in Form von aufgeschäumtem Polystyrolgranulat (z.B. Styropor), Sägemehl oder Papierfasern zugegeben werden, um die Porosität insbesondere des Bindetons und somit des Ziegelmoduls insgesamt zu erhöhen. Beispielhaft seien hier Zugaben von bis zu etwa 25 % vom Scherbenvolumen genannt, wobei ohne den Einsatz des Tonleichtmaterials Zugaben von bis zu etwa 45 % üblich und notwendig sind.

Ferner gilt auch, dass die Porosität und Rohdichte des resultierenden Ziegelmoduls nach dem Brennen maßgeblich durch die zugesetzte Menge an Tonleichtmaterial bzw. das Mengenverhältnis aus Bindeton und Tonleichtmaterial bestimmt werden. Hohe Anteile an Tonleichtmaterial bewirken einen hohen Porengehalt in dem Ziegelmodul und damit gute Dämmeigenschaften bei gleichzeitig geringem Gewicht. Derartige Ziegelmodule werden bevorzugt als nichttragende, wärmedämmende Vorsatzschalen verwendet. Mit steigendem Bindetonanteil erhöht sich hingegen die Tragfähigkeit des Ziegelmoduls.

Auf Grundlage der oben beschriebenen Aspekte der vorliegenden Erfindung und Offenbarung ist festzuhalten, dass die Erfindung die Verwendung eines Tonleichtmaterials zur Herstellung von Ziegelmodulen mit Nettotrockenrohdichten bzw. Scherbenrohdichten kleiner gleich und größer gleich 1 t/m³, die Verwendung eines Tonleichtmaterials als energiefreies und gattungsgleiches Porosierungsmittel in der Ziegelherstellung und generell die Verwendung des Tonleichtmaterials als Leichtzuschlagstoff in der Baumaterialherstellung, lehrt.

### Kurze Beschreibung der Zeichnung

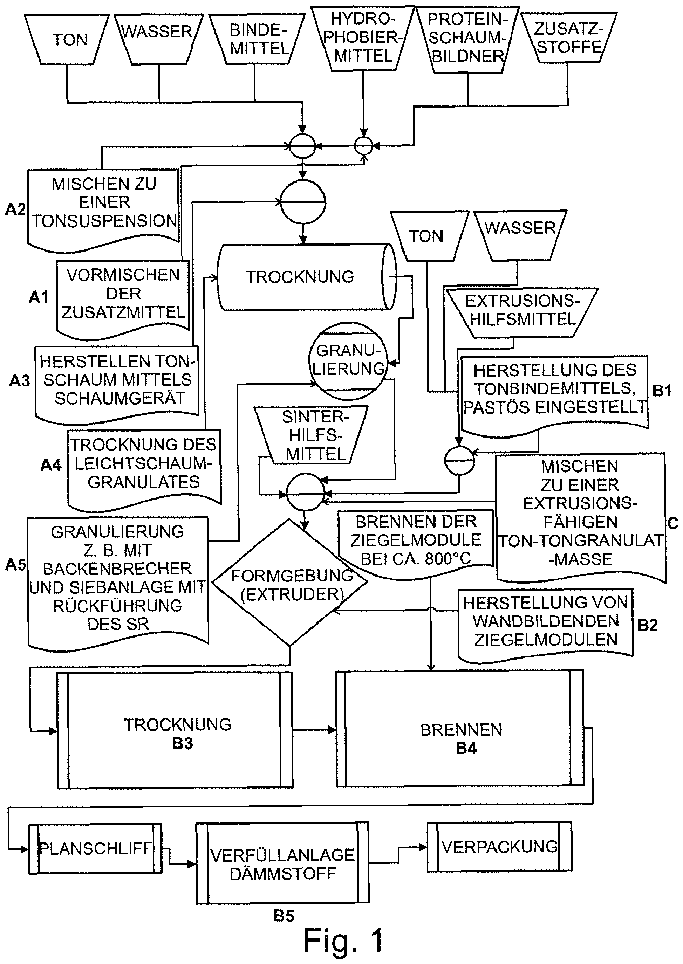

Fig. 1 stellt ein Flussdiagramm der Verfahrensschritte zur Herstellung von Ziegelmodulen aus Ton dar.

### Detaillierte Beschreibung bevorzugter Ausführungsformen

Fig. 1 zeigt ein Flussdiagramm für einen kompletten Herstellungsprozess von Ziegelmodulen aus Ton gemäß Aspekten der vorliegenden Erfindung. Der Gesamtprozess lässt sich dabei in zwei Prozessgruppen, Gruppe A und Gruppe B, unterteilen. Prozessgruppe A umfasst dabei Schritte zur Herstellung eines Tonleichtmaterials, während Prozessgruppe B Schritte zur Herstellung eines Scherbens umfasst. Beide Prozessgruppen treten im Schritt C miteinander in Verbindung.

In der Prozessgruppe A wird das Tonleichtmaterial hergestellt. In Schritt A1 werden zunächst diverse Zusatzstoffe gründlich vorgemischt und im Schritt A2 einem Gemisch aus tonhaltigem Material, Wasser und Bindemittel zugeführt. Die so erhaltene Tonsuspension wird in Schritt A3 einem Schaumgerät zugeführt und darin aufgeschäumt, um einen formbeständigen Tonleichtschaum zu erhalten. Der so erzeugte Tonleichtschaum wird im Schritt A4 durch einen Trockner geführt, um dessen Restfeuchte zu reduzieren und dem Schaum eine gewisse mechanische Festigkeit zu verleihen. Zur besseren Handhabbarkeit und Weiterverarbeitung wird der Tonleichtschaum im Schritt A5 z.B. in einem Backenbrecher zerkleinert und nach Bedarf ausgesiebt, wobei Siebrückstände wieder dem Backenbracher zugeführt werden. Optional (nicht in Fig. 1 gezeigt) besteht noch die Möglichkeit, das so erhaltene Tonleichtschaumgranulat in einem Silo zwischenzulagern und es daraus jederzeit zur Weiterverarbeitung entnehmen zu können. Damit ist die Prozessgruppe A zunächst abgeschlossen.

Prozessgruppe B beschreibt die Herstellung von Ziegelmodulen und beginnt mit Schritt B1 in dem das Grundmaterial für die Ziegelherstellung d.h. ein pastös eingestellter, plastisch formbarer Bindeton hergestellt wird. Im Schritt C wird eine Verbindung zwischen dem Verfahren zur Herstellung des Tonleichtmaterials und dem zur Herstellung des Ziegelmoduls etabliert, indem der Bindetonmasse, je nach Bedarf granuliertes Tonleichtmaterial sowie optional Sinterhilfsmittel zugesetzt werden und das Ganze zu einer extrusionsfähigen Bindeton-Tonleichtschaumgranulat-Masse vermischt wird. Im Schritt C können die Eigenschaften des späteren Scherbens maßgeblich vorbestimmt werden. Hier entscheidet sich auch, ob das Tonleichtmaterial vorwiegend als Porosierungsmittel dient oder der Hauptbestandteil des Scherbenmaterials werden soll. Die Schritte B2 bis B5 beschreiben im Wesentlichen übliche Verfahrensschritte bei der Ziegelherstellung. Die im Schritt C erzeugte Masse wird zum Beispiel mit einem Vakuumstrangextruder und einem entsprechenden Formwerkzeug zu Ziegelmodulen mit massigen Stegen geformt. Die so geformten Ziegelmodule werden getrocknet B3, bei beispielsweise ca. 800 °C gebrannt B4 und nachbearbeitet B5. Bei Lochziegeln kann das Nachbearbeiten noch die Verfüllung von Dämmstoffen in die Ausnehmungen des Ziegelmoduls umfassen, um die Dämmeigenschaften zu steigern.

Tabelle 1 stellt zwei Ausführungsbeispiele für Scherben/Ziegelmodule mit unterschiedlichen Gehalten an Tonleichtmaterial gegenüber. In Ausführungsbeispiel 1 ist der Gehalt an zugegebenem Tonleichtmaterial verhältnismäßig hoch und die durch das Tonleichtmaterial in den Scherben eingetragene Porosität bewirkt einen hohen Porengehalt im Scherben. Daraus ergeben sich besonders gute Dämmeigenschaften des Ziegelmoduls. Im Ausführungsbeispiel 2 hingegen wird weniger Tonleichtmaterial verwendet, wodurch sich die Porosität verringert und die Rohdichte erhöht. Bei geometrisch vergleichbaren Ziegelmodulen ergibt sich für das Ausführungsbeispiel 2 jedoch eine höhere Tragfähigkeit, da der Anteil lastaufnehmenden Vollmaterials vergrößert und die Anzahl von Diskontinuitäten im Werkstoff insgesamt verringert ist.

**Tabelle 1**

| | **Beispiel 1** | **Beispiel 2** |
|---|---|---|
| Gehalt an Tonleichtmaterial | 40 bis 90 Vol.-% | 5 bis 40 Vol.-% |
| Gehalt an Bindeton | 10 bis 60 Gew.-% | 60 bis 95 Gew.-% |
| Porengehalt | 20 bis 80 Vol.-% | 10 bis 45 Vol.-% |
| Rohdichte | 0,35 bis 1,0 t/m³ | 1,1 bis 1,6 t/m³ |

## Patentansprüche

1. Verfahren zum Herstellen von Ziegelmodulen aus tonhaltigen Materialien, mit den Schritten:
Herstellen einer formbaren Tonmasse, wobei
der Schritt des Herstellens der formbaren Tonmasse aufweist:
a) Herstellung eines Tonleichtmaterials als Bestandteil und Zuschlagstoff für Ziegelmodule und deren Herstellung, mit den Schritten:
Herstellen einer Formulierung aufweisend:
eine Tonmaterialsuspension, ein Hydrophobiermittel, einen Schaumbildner und optional ein Bindemittel und/oder Zusatzmittel, wobei
die Tonmaterialsuspension tonhaltige Materialien sowie Wasser aufweist und einen Anteil tonhaltiger Materialien von 65 bis 98 Gew.-% vom Feststoffgehalt aufweist, und
das Hydrophobiermittel zur Stabilisierung des Tonleichtmaterials gegenüber wasserhaltigen Medien dient,
Herstellen eines Tonschaums aus der Formulierung, und Trocknen des Tonschaums,
b) Herstellen eines Bindetons, bevorzugt eines hochplastisch bis pastös eingestellten Bindetons, durch Mischen von tonhaltigen Materialien, Wasser und optional zumindest eines Extrusionshilfsmittels, und
c) Mischen des Bindetons, des Tonleichtmaterials und optional zumindest eines Sinterhilfsmittels, wobei
der zugesetzte Anteil des Tonleichtmaterials 40 bis 90 Vol.-% beträgt, und der zugesetzte Anteil des Bindetons 10 bis 60 Gew.-% beträgt
oder
der zugesetzte Anteil des Tonleichtmaterials 5 bis 40 Vol.-% und der zugesetzte Anteil des Bindetons 60 bis 95 Gew.-% beträgt,
Formgebung der formbaren Tonmasse zu Ziegelmodulen,
Trocknen der geformten Ziegelmodule,
Brennen der getrockneten Ziegelmodule, und
Nachbearbeiten der gebrannten Ziegelmodule.

2. Verfahren nach Anspruch 1, wobei
die tonhaltigen Materialien Ziegelton oder Reinton sind.

3. Verfahren nach einem der vorangegangenen Ansprüche 1 bis 2, wobei das Bindemittel
zumindest eines aus der Gruppe von Tonerdeschmelzzement, Kunststoffpolymer und Geopolymer aufweist.

4. Verfahren nach einem der vorangegangenen Ansprüche 1 bis 3, wobei das Hydrophobiermittel
einen Anteil von 0,1 bis 8 Gew.-% vom Feststoffgehalt aufweist, und
zumindest siliziumhaltige Materialien aufweist.

5. Verfahren nach einem der vorangegangenen Ansprüche 1 bis 4, wobei der Schaumbildner
zumindest eines aus der Gruppe von Proteinschaumbildnern und Tensidschaumbildnern aufweist.

6. Verfahren nach einem der vorangegangenen Ansprüche 1 bis 5, wobei die Zusatzmittel
zumindest eines aus der Gruppe von Erstarrungsbeschleunigern und Hochleistungsplastifizierern aufweisen.

7. Verfahren nach einem der vorangegangenen Ansprüche, wobei
der Schritt der Herstellung der Formulierung ferner aufweist:
Herstellen einer Tonmaterialsuspension, bevorzugt einer Tonsuspension, durch Vermischen von tonhaltigen Material, Wasser und optional Bindemittel,
Herstellen einer Mischung von Zusatzstoffen, bevorzugt durch Mischen von Hydrophobiermittel, Schaumbildner und optional Zusatzmitteln, und
Mischen der Tonmaterialsuspension und der Mischung von Zusatzstoffen, wobei
bevorzugt der Schritt der Herstellung des Tonschaums ferner aufweist: Aufschäumen des Tonschaums durch ein Schaumgerät.

8. Verfahren nach einem der vorangegangenen Ansprüche, ferner mit dem Schritt:
Granulieren des Tonschaums vor oder während oder nach dem Schritt des Trocknens des Tonschaums zur Herstellung eines Tonschaumgranulats, bevorzugt mit den Schritten:
Zerkleinern des Tonschaums, und optional Aussieben des zerkleinerten Tonschaums, wobei
bevorzugt das Verfahren zur Herstellung eines Tonleichtmaterials ferner bevorzugt den Schritt: Silieren des Tonschaumgranulats aufweist.

9. Verfahren nach einem der vorangegangenen Ansprüche, wobei
bevorzugt der Schritt der Formgebung der formbaren Tonmasse aufweist: Extrudieren der formbaren Tonmasse zu Ziegelmodulen mit massigen Stegen, und
weiter bevorzugt beim Schritt des Brennens der geformten Ziegelmodule eine keramische Bindung zwischen dem Tonleichtmaterial und dem Bindeton bewirkt wird, und
insbesondere bevorzugt der Schritt des Nachbearbeitens aufweist: Planschleifen der Ziegelmodule und/oder Verfüllen von Dämmstoff in Öffnungen des Ziegelmoduls und Verpacken der fertig bearbeiteten Ziegelmodule.

10. Verfahren nach einem der vorangegangenen Ansprüche, wobei die formbare Tonmasse eine extrusionsfähige Tonmasse ist,

## Claims

1. Method for the preparation of tile modules using lightweight clay material, comprising the steps:
producing a formable clay body, wherein
the step of producing the formable clay body comprises:
a) producing a lightweight clay material as a component and aggregate for tile modules and their production, comprising the steps:
producing a formulation comprising:
a clay material suspension, a water-repellent agent, a foaming agent and, optionally, a binder and/or admixture, wherein
the clay material suspension comprises clay-containing materials as well as water and a content of clay-containing materials of 65 to 98 wt% of the solids content, and
the water-repellent agent serves to stabilise the lightweight clay material in relation to aqueous media,
producing a clay foam from the formulation, and drying the clay foam,
b) producing a bonding clay, preferably a bonding clay adjusted to be highly plastic to paste-like, by mixing clay-containing materials, water and, optionally, at least one extrusion aid, and
c) mixing the bonding clay, the lightweight clay material and, optionally, at least one sintering aid, wherein
the added content of the lightweight clay material amounts to 40 to 90 vol%, and the added content of the bonding clay amounts to 10 to 60 wt%
or
the added content of the lightweight clay material amounts to 5 to 40 vol% and the added content of the bonding clay amounts to 60 to 95 wt%,
forming the formable clay body into tile modules, drying the formed tile modules,
firing the dried tile modules, and
finishing the fired tile modules.

2. Method according to claim 1, wherein
the clay-containing materials are brick clay or pure clay.

3. Method according to one of the preceding claims 1 to 2, wherein the binder
comprises at least one from the group consisting of high-alumina cement clay, synthetic polymer and geopolymer.

4. Method according to one of the preceding claims 1 to 3, wherein the water-repellent agent has a content of 0.1 to 8 wt% of the solids content, and contains at least silicon-containing materials.

5. Method according to one of the preceding claims 1 to 4, wherein the foaming agent
comprises at least one from the group consisting of protein foaming agents and surfactant foaming agents.

6. Method according to one of the preceding claims 1 to 5, wherein the admixture
comprises at least one from the group consisting of setting accelerators and high-performance superplasticisers.

7. Method according to one of the preceding claims,
wherein
the step of producing the formulation further comprises:
producing a clay material suspension, preferably a clay suspension, by mixing clay-containing material, water and, optionally, binder,
producing a mixture of additives, preferably by mixing water-repellent agent, foaming agent and, optionally, admixtures, and
mixing the clay material suspension and the mixture of additives, wherein
the step of producing the clay foam preferably further comprises: foaming the clay foam by means of a foaming device.

8. Method according to one of the preceding claims, further comprising the step:
granulating the clay foam before, during or after the step of drying the clay foam in order to produce a clay foam granulate, preferably comprising the steps: crushing the clay foam, and, optionally,
sifting the crushed clay foam, wherein
the method for producing a lightweight clay material further preferably comprises the step: ensiling the clay foam granulate.

9. Method according to one of the preceding claims,
wherein
the step of forming the formable clay body preferably comprises: extruding the formable clay body to form tile modules with massive interlocks, and
further preferably, during the step of firing the formed tile modules, a ceramic bond is achieved between the lightweight clay material and the bonding clay, and
particularly preferably, the finishing step comprises: grinding the tile modules flat and/or filling insulating material into openings in the tile module and packing the finished tile modules.

10. Method according to one of the preceding claims,
wherein the formable clay body is an extrudable clay body.

## Revendications

1. Procédé de production de modules de briques fabriqués à partir de matériaux contenant de l'argile, comprenant les étapes suivantes :
la production d'une pâte d'argile pouvant être moulée, dans lequel l'étape de production de la pâte d'argile pouvant être moulée présente :
a) la production d'un matériau léger en argile en tant que constituant et granulat pour modules de briques et la production de ceux-ci, comprenant les étapes suivantes :
la production d'une formulation présentant :
une suspension de matériaux en argile, un agent hydrophobe, un agent moussant et facultativement un agent de liaison et/ou des additifs, dans lequel
la suspension de matériaux en argile présente des matériaux contenant de l'argile ainsi que de l'eau et présente une proportion de matériaux contenant de l'argile allant de 65 à 98 % en poids pour la teneur en matières solides, et l'agent hydrophobe sert à la stabilisation du matériau léger en argile par rapport à des milieux aqueux,
la production d'une mousse d'argile à partir de la formulation, et le séchage de la mousse d'argile,
b) la production d'une argile de liaison, de préférence d'une argile de liaison adaptée pour être hautement élastique à pâteuse, par le biais d'un mélange de matériaux contenant de l'argile, d'eau et facultativement d'au moins un agent auxiliaire d'extrusion, et
c) le mélange de l'argile de liaison, du matériau léger en argile et facultativement d'au moins un agent auxiliaire de frittage, dans lequel
la proportion ajoutée du matériau léger en argile représente 40 à 90 % en volume et la proportion ajoutée de l'argile de liaison représente 10 à 60 % en poids ou
la proportion ajoutée du matériau léger en argile représente 5 à 40 % en volume et la proportion ajoutée de l'argile de liaison représente 60 à 95 % en poids,
le moulage de la pâte d'argile pouvant être moulée pour obtenir des modules de briques,
le séchage des modules de briques moulés,
la cuisson des modules de briques séchés, et
le post-traitement des modules de briques cuits.

2. Procédé selon la revendication 1, dans lequel les matériaux contenant de l'argile sont l'argile à briques ou l'argile pure.

3. Procédé selon l'une quelconque des revendications précédentes 1 à 2, dans lequel l'agent de liaison
présente au moins l'un parmi le groupe se composant de ciment alumineux fondu, polymère synthétique et géopolymère.

4. Procédé selon l'une quelconque des revendications précédentes 1 à 3, dans lequel l'agent hydrophobe
présente une proportion allant de 0,1 à 8 % en poids pour la teneur en matières solides, et
présente au moins de matériaux contenant du silicium.

5. Procédé selon l'une quelconque des revendications précédentes 1 à 4, dans lequel l'agent moussant
présente au moins l'un parmi le groupe se composant d'agents moussants à base de protéines et d'agents moussants tensioactifs.

6. Procédé selon l'une quelconque des revendications précédentes 1 à 5, dans lequel les additifs
présentent au moins l'un parmi le groupe se composant d'accélérateurs de prise et de plastifiants à haute performance.

7. Procédé selon l'une quelconque des revendications précédentes, dans lequel l'étape de production de la formulation présente en outre :
la production d'une suspension de matériaux en argile, de préférence d'une suspension d'argile, par le biais d'un mélange de matériau contenant de l'argile, d'eau et facultativement d'agents de liaison,
la production d'un mélange d'adjuvants, de préférence par le biais d'un mélange d'agents hydrophobes, d'agents moussants et facultativement d'additifs, et
le mélange de la suspension de matériaux en argile et du mélange d'adjuvants, dans lequel
de préférence l'étape de production de la mousse d'argile présente en outre : le moussage de la mousse d'argile dans un appareil de moussage.

8. Procédé selon l'une quelconque des revendications précédentes, comprenant en outre l'étape de :
granulation de la mousse d'argile avant ou pendant ou après l'étape de séchage de la mousse d'argile pour la production d'un granulat en mousse d'argile, de préférence comprenant les étapes de :
broyage de la mousse d'argile, et facultativement
passage au crible de la mousse d'argile broyée, dans lequel
de préférence le procédé de production d'un matériau léger en argile présente en outre de préférence l'étape : d'ensilage du granulat de mousse d'argile.

9. Procédé selon l'une quelconque des revendications précédentes, dans lequel
de préférence l'étape de moulage de la pâte d'argile pouvant être moulée présente : l'extrusion de la pâte d'argile pouvant être moulée pour obtenir des modules de briques dotés d'âmes massives, et
plus préférablement lors de l'étape de cuisson des modules de briques moulés une liaison céramique est opérée entre le matériau léger en argile et l'argile de liaison, et
de manière particulièrement préférée l'étape de post-traitement comprend : le surfaçage des modules de briques et/ou le remplissage par un isolant dans des ouvertures du module de brique et le conditionnement des modules de briques finis.

10. Procédé selon l'une quelconque des revendications précédentes, dans lequel la pâte d'argile pouvant être moulée est une pâte d'argile apte à être extrudée.
